# EUROPÄISCHE PATENTSCHRIFT

(11) **EP 3 478 435 B1**
(45) Veröffentlichungstag und Bekanntmachung des Hinweises auf die Patenterteilung: **28.02.2024**
(21) Anmeldenummer: 17717384.6
(22) Anmeldetag: 11.04.2017
(51) Int. Cl.: B23B 51/00, B23B 51/02

(54) **GESTEINSBOHRWERKZEUG UND VERFAHREN ZUR HERSTELLUNG EINES SOLCHEN GESTEINSBOHRWERKZEUGS**
ROCK DRILLING TOOL AND METHOD FOR MANUFACTURING SUCH A ROCK DRILLING TOOL
OUTIL DE PERCAGE DE ROCHE ET METHODE DE FABRICATION D'UN TEL OUTIL DE PERCAGE DE ROCHE

(30) Priorität: 30.06.2016 DE 102016211953
(43) Veröffentlichungstag der Anmeldung: 08.05.2019
(73) Patentinhaber: Robert Bosch GmbH, 70442 Stuttgart (DE)
(72) Erfinder: VOLZ, Alexander, 88255 Baienfurt (DE)
(86) Internationale Anmeldenummer: PCT/EP2017/058630
(87) Internationale Veröffentlichungsnummer: WO 2018/001586

(56) Entgegenhaltungen:
- EP-A2- 1 935 540
- DE-A1- 10 208 630
- DE-A1- 19 859 885
- DE-A1- 19 915 303
- DE-A1- 19 915 305

## Beschreibung

Die Erfindung bezieht sich auf ein Gesteinsbohrwerkzeug gemäß dem Oberbegriff des Anspruchs 1 und ein Verfahren zur Herstellung eines Gesteinsbohrwerkzeug. Ein solches Gesteinsbohrwerkzeug und ein solches Verfahren sind aus der DE 199 15 303 A1 bekannt.

### Stand der Technik

Es sind diverse Gesteinsbohrwerkzeuge mit einem Hartmetallkopf und einem mit dem Hartmetallkopf verbundenem Schaft mit einer sich um den Schaft windenden Fördernut bekannt. Dabei ist dieser Schaft von einem maximalen Durchmesser begrenzt, welcher sich in axialer Richtung einer Rotationsachse des Gesteinsbohrwerkzeugs konstant bleibt.

### Offenbarung der Erfindung

Der Erfindung liegt die Aufgabe zugrunde, mit einfachen konstruktiven Maßnahmen eine Bohrwerkzeug, insbesondere ein Gesteinsbohrwerkzeug, zu verbessern.

Die Aufgabe wird gelöst mit einem Gesteinsbohrwerkzeug gemäß dem Anspruch 1.

Durch das erfindungsgemäße Bohrwerkzeug wird ein besonders stabiler Bohrkopf des Bohrwerkzeugs ermöglicht, da sich aufgrund der Durchmesserverstärkung des Förderabschnitts des Bohrwerkzeugs eine besonders guter Zusammenhalt des Bohrkopfs mit dem Bohrerschaft ergibt. Weiterhin wird eine Standzeit des Bohrwerkzeugs erhöht, indem die Durchmesserverstärkung dort vorgesehen ist, wo der Verschleiß am größten ist. In der Regel betrifft dies den Bohrkopf und den Bohrerschaft an einem den Bohrkopf stützenden Bohrkopfstützbereich. Dadurch wird zum Einen eine den Bohrkopf und den Bohrerschaft verbindende Verbindungsfläche maximiert, sodass der Bohrkopf eine besonders feste Verbindung mit dem Bohrerschaft erzeugt, und zum Anderen eine besonders hohe Torsionskraftübertragung von einer das Bohrwerkzeug rotatorisch betreibbaren Werkzeugmaschine auf den Bohrkopf des Bohrwerkzeugs ermöglicht. Auch reduziert sich durch die Durchmesserverstärkung die Gefahr einer Abscherung zwischen des Bohrkopfs von dem Bohrerschaft.

Aufgrund der Durchmesserverstärkung des Förderabschnitts wird zusätzlich auch ein Zwischenraum zwischen einer Bohrlochseitenwand und einer Durchmesserverstärkung verringert, sodass beim Bohren des Bohrwerkzeugs anfallendes Bohrmehl mittels den Fördernuten besonders schnell und effektiv aus dem Bohrloch gefördert werden kann.

Dadurch verbleibt weniger Bohrmehl zwischen der Bohrlochseitenwand und der Durchmesserverstärkung, sodass ein zu starkes Verdichten des Bohrmehls in dem Bohrloch vermieden wird. Dadurch kann selbst beim Bohren von tiefen Bohrlöchern eine zu hohe Verdichtung des Bohrmehls in dem Bohrloch und ein hierdurch resultierendes schlagartiges Herausschleudern von Bohrmehl aus dem Bohrloch, wie beispielsweise eine Staubexplosion, zuverlässig verhindert werden, wodurch ein Bediener des Bohrwerkzeugs geschützt wird.

Das erfindungsgemäße Bohrwerkzeug ist zumindest zweiteilig aufgebaut und umfasst einen einteilig ausgebildeten Bohrkopf mit zumindest einem Schneidelement und einen einteilig ausgebildeten Bohrerschaft, welcher mit dem Bohrkopf stoffschlüssig verbunden ist, wodurch das Bohrwerkzeug einstückig ausgebildet ist.

Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Zweckmäßigerweise weist der Bohrerschaft zumindest einen dem Bohrkopf benachbarten, insbesondere angrenzenden, Förderabschnitt und einen dem Bohrkopf abgewandten Ende des Bohrerschafts einen Befestigungsabschnitt auf. Der Befestigungsabschnitt des Bohrerschafts kann dabei ähnlich oder identisch zu herkömmlichen sich auf dem Markt befindlichen Befestigungsabschnitten von Bohrwerkzeugen, wie beispielsweise SDS, SDS-max oder SDS-plus, ausgebildet sein, sodass hier nicht weiter auf den Befestigungsbereich eingegangen wird.

Die erfindungsgemäße Durchmesserverstärkung des Bohrerschafts kann insbesondere durch eine drehende Bearbeitung an beispielsweise einer herkömmlichen Drehmaschine hergestellt werden. Alternativ oder zusätzlich kann die Durchmesserverstärkung auch auf anderem Wege hergestellt werden. Ein Beispiels hierfür wäre ein Rohling mit einer Durchmesserverstärkung, indem beispielsweise ein erstes Ende des Rohlings einen maximalen Durchmesser aufweist und ein auf einer dem ersten Ende des Rohlings abgewandten Seite des Rohlings vorgesehenes zweites Ende des Rohlings einen weiteren maximalen Durchmesser aufweist, wobei der Durchmesser des ersten Endes den Durchmesser des zweiten Endes übersteigt. Ein weiteres Beispiel wäre ein umformendes Verfahren, welches beispielsweise durch eine Streckung oder Stauchung des Rohlings oder gar des mit Führungsnuten versehenen Bohrerschafts in radialer Richtung einer Rotationsachse realisiert werden könnte. Dabei könnten beispielsweise erhöhte Temperaturen ein derartiges massiv-umformendes Verfahren erleichtern. Auch kommen weitere Verfahren zur Erzeugung einer derartigen Durchmesserverstärkung in Frage, die hier nicht explizit erwähnt werden.

Die Unteransprüche geben zweckmäßige Weiterbildungen des erfindungsgemäßen Bohrwerkzeugs an.

Es kann zweckmäßig sein, dass der Förderabschnitt an dem Bohrkopf benachbarten, insbesondere angrenzenden, Bohrkopfstützbereich des Förderabschnitts einen ersten maximalen Durchmesser D1 und an einem dem Befestigungsabschnitt benachbarten, insbesondere angrenzenden, Fördernutauslaufbereichs des Förderabschnitts einen zweiten maximalen Durchmesser aufweisen, wobei der erste Durchmesser D1 größer ist als der zweite Durchmesser D2. Hierdurch wird ein Bohrwerkzeug bereitgestellt, dass eine Durchmesserverstärkung an den Bereichen des Bohrwerkzeugs aufweist, die am stärksten von Verschleiß betroffen sind. In der Regel sind dies Bereiche am Bohrkopf und zum Bohrkopf benachbarte, insbesondere angrenzende, Bereiche des Bohrerschafts.

Erfindungsgemäß weist der Bohrkopf zumindest ein Nebenschneidelement auf, wobei das Bohrwerkzeug einen das zumindest eine Nebenschneidelement des Bohrkopfs begrenzenden Nebenschneiddurchmesser aufweist, welcher im Wesentlichen, dem ersten Durchmesser des Förderabschnitts entspricht. Hierdurch kann ein besonders vorteilhafter Übergang einer Bohrkopfumfangsfläche des Bohrkopfs mit einer Bohrerschaftumfangsfläche des Förderabschnitts des Bohrerschafts erfolgen, sodass eine gegenüber der Bohrerschaftumfangsfläche des Förderabschnitts in radialer Richtung zu der Rotationsachse abstehende Bohrkopfumfangsfläche des Bohrkopfs vermieden wird und somit eine "Verhacken" des Bohrwerkzeugs in einem Bohrloch verhindert werden kann.

Des Weiteren kann es zweckmäßig sein, dass der Bohrkopf zumindest ein Hauptschneidelement aufweist, wobei das Bohrwerkzeug einen das zumindest eine Hauptschneidelement des Bohrkopfs begrenzenden Hauptschneiddurchmesser aufweist, welcher den ersten Durchmesser des Förderabschnitts übersteigt. Hierdurch kann das Bohrwerkzeug reibreduziert bohren, da eine Umfangsfläche des Hauptschneidelements einem erhöhten Verschleiß ausgesetzt ist und eine Reduzierung der Verschleißflächen durch eine gegenüber der Umfangsfläche Hauptschneidelements in radialer Richtung der Rotationsachse zurückversetzte Bohrerschaftumfangsfläche des Förderabschnitts lediglich einem verminderten Verschleiß ausgesetzt ist.

Es kann zweckmäßig sein, dass der Bohrkopf zwei Hauptschneidelemente aufweist. Dadurch kann ein besonders effektiver Vorschub in ein zu bearbeitendes Werkstück erreicht werden.

Unter einem "Schneidelement" soll in diesem Zusammenhang ein Element verstanden werden, das am Bohrkopf angebracht ist und mindestens eine, insbesondere keilförmige, Schneidkante aufweist, die zur Formgebung des Werkstücks durch Trennen ausgebildet ist. Insbesondere kann das Schneidelement kreisausschnittartig im Bohrkopf ausgebildet sein und sich entgegen der Vorschubrichtung bis zur Verbindungsfläche des Bohrkopfes mit dem Schaft erstrecken. Das Bohrwerkzeug kann dabei 2, 3, 4, 5 oder mehrere Schneidelemente aufweisen. Das Schneidelement kann durch ein Haupt- und/oder Nebenschneidelement ausgebildet sein.

Der Begriff "Schneidkante" soll hier insbesondere eine Kante des Schneidelements definieren, die dazu vorgesehen ist, während einer Bearbeitung eines Werkstücks mittels des Schneidelements Werkstückpartikel des Werkstücks abzutragen, abzuschneiden und/oder abzuschaben. Die Schneidkante kann als zumindest eine Ecke und/oder zumindest eine Zuspitzung ausgebildet sein.

Ferner kann es zweckmäßig sein, dass sich der Bohrkopfstützbereich des Förderabschnitts in axialer Richtung entlang der Rotationsachse bis zu einem 3-fachen, insbesondere bis zu einem 2-fachen, vorzugsweise bis zu einem 1-fachen, des ersten Durchmessers erstreckt. Weiterhin kann es zweckmäßig sein, dass sich der Bohrkopfstützbereich des Förderabschnitts in axialer Richtung entlang von einem Bohrkopf bis zu 50 mm, insbesondere bis zu 40 mm, vorzugsweise bis zu 30 mm, bevorzugt bis zu 25 mm, besonders bevorzugt bis zu 20 mm, erstreckt. Insbesondere kann der maximale Durchmesser im Bohrerkopfstützbereich von einem Bohrerschaft in Richtung Bohrkopf kontinuierlich ansteigen. Insbesondere kann der maximale Durchmesser im Bohrerkopfstützbereich von einem Bohrerschaft in Richtung Bohrkopf abrupt ansteigen. Bei einem kontinuierlichen Ansteigen des maximalen Durchmessers, kann dabei eine Kerbwirkung vermindert werden.

Weiterhin kann es zweckmäßig sein, dass ein, insbesondere maximaler, dritter Durchmesser des Bohrkopfstützbereiches in axialer Richtung der Rotationsachse von dem Bohrkopf zum Bohrerschaft derart abnimmt, insbesondere kontinuierlich abnimmt, dass der dritte Durchmesser des Bohrkopfstützbereichs von dem ersten Durchmesser des Bohrkopfstützbereichs des Förderabschnitts zu dem zweiten Durchmesser des Fördernutauslaufbereichs des Förderabschnitts abnimmt.

Des Weiteren kann es zweckmäßig sein, dass der erste Durchmesser gegenüber dem zweiten Durchmesser bis zu 10 %, insbesondere bis zu 8 %, vorzugsweise bis zu 5 %, bevorzugt bis zu 3 %, größer ist.

Es wird weiter vorgeschlagen, dass der Bohrkopf eine an die Fördernut des Förderabschnitts anschließende weitere Bohrkopffördernut aufweist, wobei die Bohrkopffördernut in axialer Richtung der Rotationsachse in die Fördernut des Förderabschnitts übergeht, wobei der Bohrerschaft derart stoffschlüssig mit dem Bohrkopf verbunden ist, dass die Bohrkopffördernut zumindest teilweise von einem den Bohrkopf mit dem Bohrerschaft verbindenden Verbindungsmaterial überzogen bzw. überdeckt ist. Dadurch kann insbesondere, ein "nahtloser" bzw. ein fugenloser bzw. ein kantenloser, Übergang zwischen der Bohrkopffördernut und der Fördernut erfolgen, sodass der bei einer Bearbeitung eines Werkstücks anfallende Bohrstaub effektiv abtransportiert werden kann und einen Übergang zwischen der Bohrkopffördernut und der Fördernut widerstandsverringert überwind et..

Es wird ferner vorgeschlagen, dass die Fördernut spanend, insbesondere drehend, in den Bohrerschaft eingebracht wird. Hierdurch kann das Bohrwerkzeug besonders vorteilhaft schnell und aufwandsminimiert hergestellt werden. Auch sind die Werkstoffeigenschaften einer Bohrerschaftoberfläche besonders vorteilhaft für eine weitere Bearbeitung des Bohrwerkzeugs bei der Herstellung, da Verfestigungen und Verhärtungen der Bohrerschaftoberfläche beispielsweise gegenüber massiv-verformter Fließpressrohlingen in einem geringeren Maße auftreten, wodurch eine Verformbarkeit des Bohrerschafts beispielsweise bei nachfolgenden Herstellungsschritten vereinfacht und insbesondere berechenbarer wird.

Die Erfindung bezieht sich ferner auf ein Verfahren zur Herstellung eines Gesteinsbohrwerkzeugs gemäß dem Anspruch 10.

Unter "Erwärmen" soll in diesem Zusammenhang zumindest ein partielles Erwärmen der Fügepaare, insbesondere des Bohrkopfs und des Bohrerschafts, verstanden werden, welche an deren Fügezonen erwärmt werden um eine stoffschlüssige Verbindung erzeugen.

Unter "axiales Aufsetzen" soll ein Aufsetzen zumindest zweier Fügepaare, insbesondere des Bohrerschafts auf dem Bohrkopf, aufeinander verstanden werden, welche die insbesondere unter einem Anpressdruck gegeneinander gedrückt werden.

Es wird weiter vorgeschlagen, dass zumindest der Bohrerschaft zumindest abschnittsweise über 1200° C erhitzt wird. Hierdurch wird eine besonders einfache und vorteilhafte Verbindung des Bohrerschafts mit dem Bohrkopf erreicht, sodass eine Verbindungsfläche des Bohrerschafts eine besonders vorteilhafte Verbindung mit dem Bohrerkopf erzeugen kann. Insbesondere kann das Fügen des Bohrkopfs mit dem Bohrerschaft bei einer Temperatur von bis zu 1500° C, insbesondere bis zu 1400° C, vorzugsweise bis zu 1300° C, bevorzugt bis zu 1100° C, besonders bevorzugt bis zu 1000° C, wie beispielsweise 900° C, erfolgen.

Es kommen diverse Fügeverfahren wie beispielsweise Schweißverfahren und/oder Lötverfahren in Betracht, die einem Fachmann hinlänglich bekannt sind. Vorteilhafterweise kann das Fügeverfahren unter Schutzgasatmosphäre erfolgen um eine besonders gute Verbindung des Bohrkopfs und des Bohrerschafts zu erreichen, indem Verbindungsflächen, insbesondere die Verbindungsfläche des Bohrkopfs und die Verbindungsfläche des Bohrerschafts, durch ein Schutzgas vor dem Zutritt von Atmosphärengasen wie beispielsweise N₂, O₂ oder H₂ geschützt werden.

Als Schutzgas kommen Stoffe oder Stoffverbindungen wie Aluminium, Magnesium, Argon, Helium, Titan, O₂, CO₂ oder H₂ allein für sich oder in Kombination beispielsweise mit Argon oder Argon-Helium-Gemischen in Frage. Auch kann das Schutgas lediglich aus Argon oder Helium bzw. deren Gemische bestehen. Als Gemischkomponenten können vorzugsweise Argon, Helium, Kohlenstoffdioxid aber auch Sauerstoff, Wasserstoff und Stickstoff Verwendung finden.

Durch die Spiraldurchmesserverstärkung werden derzeit gängige Herstellungsprozesse bei der Herstellung des Bohrwerkzeugs nicht bzw. nicht in nennenswertem Maße beeinflusst.

Unter einem "umformenden Verfahren" soll in diesem Zusammenhang ein Verfahren verstanden werden, in dem eine elastische und/oder plastische Verformung durch eine Massivumformung, insbesondere eine Materialverdrängung und/oder eine Materialanhäufung des Werkstücks, erreicht wird. Unter einer "Massivumformung" soll dabei ein Verfahren wie beispielsweise Walzen, Gesenkschmieden, Kaltumformen, Fließpressen, Schmieden (Freifomschmieden), Stauchen oder Profilwalzen verstanden werden. Dabei soll das zu verformende Werkstück durch ein Umformwerkzeug, wie beispielsweise durch zumindest einen Hammer oder durch zumindest eine Scheibe, insbesondere eine Schmiedescheibe, einer Umformvorrichtung verformt werden. Beispielsweise können zwei oder mehrere Umformwerkzeuge auf das zu verformende Werkstück bzw. einen Rohling gedrückt werden. Somit kann eine gewünschte Umformung bzw. Ausformung des Bohrerschafts erzielt werden. Eine Anordnung in einer Werkzeugvorrichtung des zumindest einen Umformwerkzeugs kann beispielsweise der EP 0 792 705 A2 entnommen werden, die beschreibt wie eine Nut eines Bohrwerkzeugs hergestellt werden kann.

Unter einem "Umformwerkzeug" soll in diesem Zusammenhang ein Werkzeug einer Vorrichtung zur Herstellung von Bohrwerkzeugen verstanden werden, das zur Einbringung einer Verformung des herzustellenden Bohrwerkzeugs ausgebildet ist. Das zumindest eine Umformwerkzeug kann als eine Pressvorrichtung ausgebildet sein, welche ein Bohrwerkzeug, insbesondere einen Bohrerschaft umgreift und gegen einen Bohrkopf drückt. Prinzipiell sind aber auch andere einem Fachmann als sinnvoll erscheinende Umformwerkzeuge möglich.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Hierbei zeigt:
- Fig. 1: eine perspektivische Ansicht einer Handwerkzeugmaschine mit einer Bohrwerkzeug,
- Fig. 2: eine Ansicht auf eine erste Ausführungsform eines erfindungsgemäßen Bohrwerkzeugs,
- Fig. 3: eine weitere Ansicht auf das Bohrwerkzeugs aus Fig. 2,
- Fig. 4: eine weitere Ansicht auf das Bohrwerkzeugs aus Fig. 2,
- Fig. 5: eine stirnseitige Ansicht auf einen Bohrkopf des Bohrwerkzeugs aus Fig. 2 und
- Fig. 6: eine stirnseitige Ansicht auf einen Bohrkopf eines nicht erfindungsgemäßen Bohrwerkzeugs.

In den folgenden Figuren sind gleiche Bauteile mit den gleichen Bezugszeichen versehen.

Die folgenden Figuren beziehen sich jeweils auf ein Bohrwerkzeug 1, insbesondere zur Aufnahme in einer Aufnahmevorrichtung 105 einer Werkzeugmaschine, vorzugsweise eine Handwerkzeugmaschine 101, zur bohrenden und/oder schlagenden Bearbeitung von, insbesondere mineralischen, Werkstoffen, wie beispielsweise Gestein, Beton und/oder armierten Beton. Das erfindungsgemäße Bohrwerkzeug kann auch zur Bearbeitung von anderen, einem Fachmann als sinnvoll erscheinenden Werkstoffen, wie Holz, Kunststoff oder einem Verbund, vorgesehen sein.

Das Bohrwerkzeug ist dazu vorgesehen, eine rotatorische und/oder translatorische Arbeitsbewegung auf ein zu bearbeitendes Werkstück aufzubringen. Dabei wird ein translatorischer Vorschub in das Werkstück eingebracht, indem der Bediener der Handwerkzeugmaschine eine Kraft auf die Handwerkzeugmaschine, insbesondere das Handwerkzeugmaschinengehäuse 103, aufbringt.

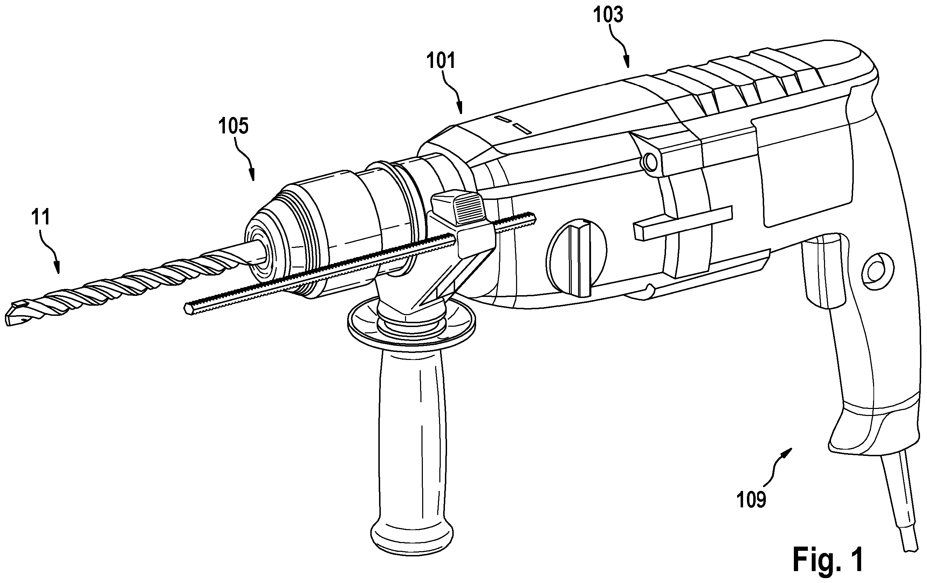

Das erfindungsgemäße Bohrwerkzeug ist dabei zur Aufnahme in handelsüblichen SDS-Aufnahmevorrichtungen von Handwerkzeugmaschinen vorgesehen. Fig. 1 zeigt eine perspektivische Ansicht auf eine Handwerkzeugmaschine 101 mit einem in der Aufnahmevorrichtung 105 eingespannten Bohrwerkzeug 11. Die Handwerkzeugmaschine 101 weist dabei ein Handwerkzeugmaschinengehäuse 103 mit zumindest einem Griffbereich 109 zum Umgreifen mit zumindest einer Hand eines Benutzers auf. Die Aufnahmevorrichtung 105 entspricht einer einem Fachmann bereits bekannten und auf dem Markt erhältlichen SDS Aufnahme, wie beispielsweise SDS-max, SDS-plus, SDS-top, SDS-plus oder gar SDS-quick, sodass auf die Aufnahme nicht weiter eingegangen wird.

Als Werkzeugmaschine eignet sich dabei sowohl eine stationäre Werkzeugmaschine wie beispielsweise eine industrielle Werkzeugmaschine, als auch eine nicht-stationäre Werkzeugmaschine wie beispielsweise eine Handwerkzeugmaschine in Form einer Schlagbohrmaschine oder in Form eines Bohrhammers. Das Bohrwerkzeug in dieser Ausführungsform ist als ein Gesteinsbohrwerkzeug ausgebildet und dazu vorgesehen Werkstücke aus Gestein, Beton, armierten Beton und/oder ähnlichen Werkstoffen zu bearbeiten.

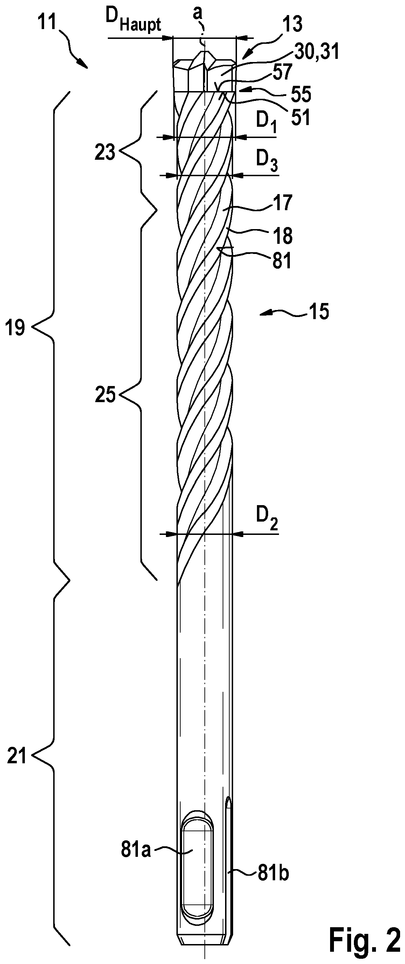

Fig. 2 zeigt das Bohrwerkzeug 1 aus Fig. 1. Das Bohrwerkzeug 11 ist im Wesentlichen zylinderförmig ausgebildet und erstreckt sich axial entlang einer Werkzeugachse a. Das Bohrwerkzeug 11 weist zumindest einen Bohrkopf 13 und einen mit dem Bohrkopf 13 verbundenen Bohrerschaft 15 auf. Der Bohrkopf 13 und der Bohrerschaft 15 sind bei der Herstellung einteilig getrennt voneinander ausgeführt und werden bei der Herstellung des Bohrwerkzeugs 11 stoffschlüssig zusammengefügt, sodass das zusammengefügte Bohrwerkzeug einstückig ausgebildet ist.

Der Bohrkopf 13 ist aus einem Hartmetall Werkstoff ausgebildet, um höchsten Verschleißbelastungen standhalten. Der Bohrkopf 13 ist dabei als ein Vollhartmetallkopf ausgeführt, sodass der Bohrkopf 13 die axiale Erstreckung des Bohrerschafts 15 in axialer Richtung der Rotationsachse a begrenzt. Der Bohrkopf 13 umfasst mehrere Schneidelemente, welche zum Abtragen, Schneiden, Schaben und/oder Zertrümmern des zu bearbeitenden Werkstücks ausgebildet sind. Die Schneidelemente sind je nach Ausführungsform des Bohrkopfs 13 in Hauptschneidelemente 71 und Nebenschneidelemente 75 unterteilt.

Der Bohrerschaft 15 kann dabei vorzugsweise aus einem Stahlwerkstoff ausgebildet sein. Der Bohrerschaft 15 weist entlang der Rotationsachse a einen an den Bohrkopf 13 angrenzenden Bohrerschaft 15 auf. Der Bohrerschaft 15 ist dabei stoffschlüssig, insbesondere mit Zuhilfenahme eines Zusatzwerkstoffs oder ohne Zuhilfenahme eines Zusatzwerkstoffs, mit dem Bohrkopf 13 verbunden.

Der Bohrerschaft weist einen Bohrkopfstützbereich 19 und einen an den Förderabschnitt 19 angrenzenden Befestigungsabschnitt 21 auf. Der Befestigungsabschnitt 21 ist dabei an einer dem Bohrkopf 13 abgewandten Seite des Förderabschnitts 19 angeordnet.

Der Förderabschnitt 19 weist vier sich spiralförmig um die Rotationsachse a windende Fördernuten 17 auf, welche dazu vorgesehen sind, beim Bohren, beispielsweise eines Bohrlochs in ein Werkstück, anfallendes Bohrmehl entlang einer axialen Richtung der Rotationsachse a von einer dem Bohrkopf 13 abgewandten Richtung aus dem Bohrloch zu fördern. Alternativ oder zusätzlich können auch weniger als vier, wie beispielsweise eine einzige, zwei oder drei, Fördernuten 17 oder mehr als vier, wie beispielsweise fünf, sechs oder mehr, Fördernuten 17 ausgebildet sein.

Die spiralförmigen Fördernuten 17 werden in Umfangsrichtung um die Rotationsachse a von sich spiralförmig um die Rotationsachse a windenden Stegen 18 getrennt. Die Stege 18 verlaufen parallel zu den Fördernuten 17 und sind entsprechend spiralförmig ausgebildet. Ein maximale Erstreckung in radialer Richtung der Rotationsachse a der Stege 18 begrenzt dabei die maximale Erstreckung des Bohrwerkzeugs 11 in radialer Richtung der Rotationsachse a. Die Stege 18 weisen jeweils eine die Stege 18 in radialer Richtung der Rotationsachse a begrenzende Stegumfangsfläche 81 auf, welche einen den Förderabschnitt 19 des Bohrerschafts 15 begrenzenden Durchmesser des Bohrerschafts 15 bzw. des Förderabschnitts 19 um die Rotationsachse a definiert. Die Stegumfangsfläche 81 ist beispielsweise dazu vorgesehen, entlang einer nicht weiter dargestellten Bohrlochwand zu gleiten und eine radiale Bewegung des Bohrwerkzeugs 11 in einem Bohrloch zu begrenzen.

Erfindungsgemäß ändert sich der Durchmesser des Förderabschnitts 19 des Bohrerschafts 13 zumindest abschnittsweise entlang der Rotationsachse a und bildet eine Durchmesserverstärkung bzw. eine Durchmesserzunahme benachbart, insbesondere angrenzend, zum Bohrkopf 13.

Der Förderabschnitt 19 weist einen benachbart, insbesondere angrenzend, zu dem Bohrkopf 13 angeordneten Bohrkopfstützbereich 23 auf, welcher dazu vorgesehen ist den Bohrkopf 13 in axialer Richtung der Rotationsachse a zu stützen und eine Bewegung, insbesondere eine translatorische Schlagbewegung in axialer Richtung der Rotationsachse a und/oder eine rotatorische Schneidbewegung bzw. Abtragsbewegung um die Rotationsachse a, auf den Bohrkopf 13 und entsprechend auch auf das zu bohrende Werkstück zu übertragen.

Der Förderabschnitt 19 weist an dem dem Bohrkopf 13 angrenzenden Bohrkopfstützbereich 23 des Förderabschnitts 19 einen ersten maximalen Durchmesser D1 und an einem in axialer Richtung der Rotationsachse a an den Befestigungsabschnitt 21 angrenzenden Fördernutauslaufbereichs 25 des Förderabschnitts 19 einen zweiten maximalen Durchmesser D2 auf. Dabei ist der erste Durchmesser D1 größer ist als der zweite Durchmesser D2. Der erste Durchmesser D1 ist gegenüber dem zweiten Durchmesser D2 bis zu 8 % größer, sodass an einem dem Bohrkopf 13 angrenzenden Bereich des Förderabschnitt ein moderat größerer Durchmesser vorgesehen ist. Dadurch wird ein optimaler Kraftfluss durch einen gesamten Querschnitt des Bohrerschafts 15 ermöglicht. Der Fördernutauslaufbereich 25 ist insbesondere dazu vorgesehen, Bohrmehl aus dem Bohrloch zu fördern, sodass der Bohrkopfstützbereich 23 des Förderabschnitts 19 zwischen dem Bohrkopf 13 und dem Fördernutauslaufbereich 25 angeordnet ist.

Der Bohrkopfstützbereich 23 des Förderabschnitts 19 erstreckt sich in axialer Richtung entlang der Rotationsachse a bis zu einem 3-fachen des ersten Durchmessers D1.

Der Bohrkopfstützbereich 23 des Förderabschnitts 19 kann sich in axialer Richtung entlang der Rotationsachse a von einem Bohrkopf 13, insbesondere eines Verbindungsbereichs des Bohrkopfs uns des Bohrerschafts, bis zu 25 mm erstrecken.

Der Bohrkopf 13 weist eine an die Fördernut 17 des Förderabschnitts 19 anschließende weitere Bohrkopffördernut 23 auf, wobei die Bohrkopffördernut 31 in axialer Richtung der Rotationsachse a in die Fördernut 17 des Förderabschnitts 19 übergeht.

Der Bohrerschaft 15 ist derart stoffschlüssig mit dem Bohrkopf 13 verbunden sein, dass die Bohrkopffördernut 23 zumindest teilweise von einem den Bohrkopf 13 mit dem Bohrerschaft 15 verbindenden Verbindungsmaterial überzogen ist. Dadurch kann ein, insbesondere kantenloser, Übergang zwischen der Bohrkopffördernut 31 und der Fördernut 17 ausgeführt sein, sodass abgetragenes Bohrmehl auf besonders einfache und schnelle Weise aus dem Bohrloch gefördert wird. Dabei kann das Verbindungsmaterial insbesondere den Stahlwerkstoff des Bohrerschafts und/oder zumindest anteilig den Hartmetallwerkstoff des Bohrkopfs und/oder ein Hilfsmittelwerkstoff, beispielsweise für eine den Bohrkopf und den Bohrerschaft verbindenden Schweiß- oder einer Lötverbindung, umfassen. Der Hilfsmittelwerkstoff kann vorzugsweise zum Verbinden des Bohrkopfs und des Bohrerschafts mittels beispielsweise einer Schweiß- und/oder einer Lötverbindung ausgeführt sein. Dabei kommen Hilfsmittelwerkstoffe wie beispielsweise Aluminium, Silizium, Nickel und/oder Zinn Verwendung finden.

Der Bohrerschaft kann als Drehrohling ausgeführt sein. Alternativ kann der Bohrerschaft als Fließpressrohling ausgeführt sein.

Der Bohrerschaft 15 weist ferner einen in axialer Richtung der Rotationsachse a zu dem Förderabschnitt 19 angrenzenden Befestigungsabschnitt 21 auf, welcher dazu vorgesehen ist, das Bohrwerkzeug 11 mit einer Werkzeugmaschine 101 lösbar zu befestigen.

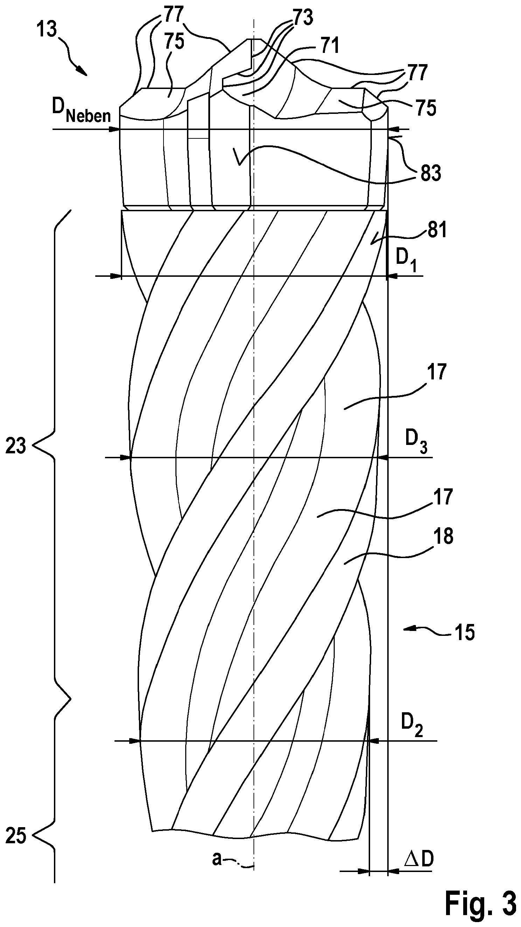

Fig. 3 bis 5 zeigen mehrere Ansichten des Bohrkopfs 13 mit zwei Hauptschneidelementen 71 bzw. zwei Hauptschneidkanten 73 und zwei Nebenschneidelementen 75 bzw. zwei Nebenschneidkanten 77.

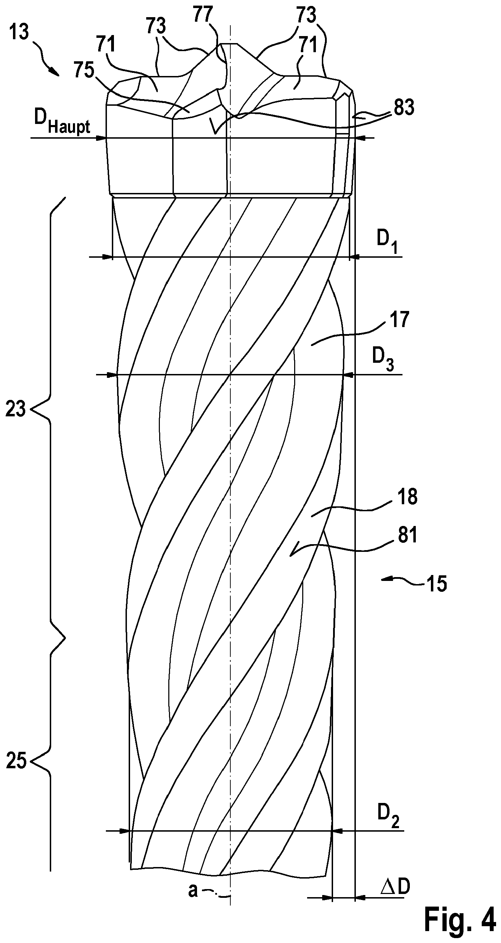

Dabei weist der Bohrkopf 13 aus Fig. 4 einen das zumindest eine Hauptschneidelement 71 bzw. die Hauptschneidkante 73 des Bohrkopfs 13 begrenzenden Hauptschneiddurchmesser D_Haupt auf, welcher den ersten Durchmesser D1 des Förderabschnitts 19 in radialer Richtung der Rotationsachse a übersteigt.

Ferner weist der Bohrkopf 13 aus Fig. 3 einen das zumindest eine Nebenschneidelement 75 bzw. die Nebenschneidkante 77 des Bohrkopfs 13 begrenzenden Nebenschneiddurchmesser D_Neben auf, welcher, insbesondere zumindest im Wesentlichen, dem ersten Durchmesser D1 des Förderabschnitts 19 entspricht.

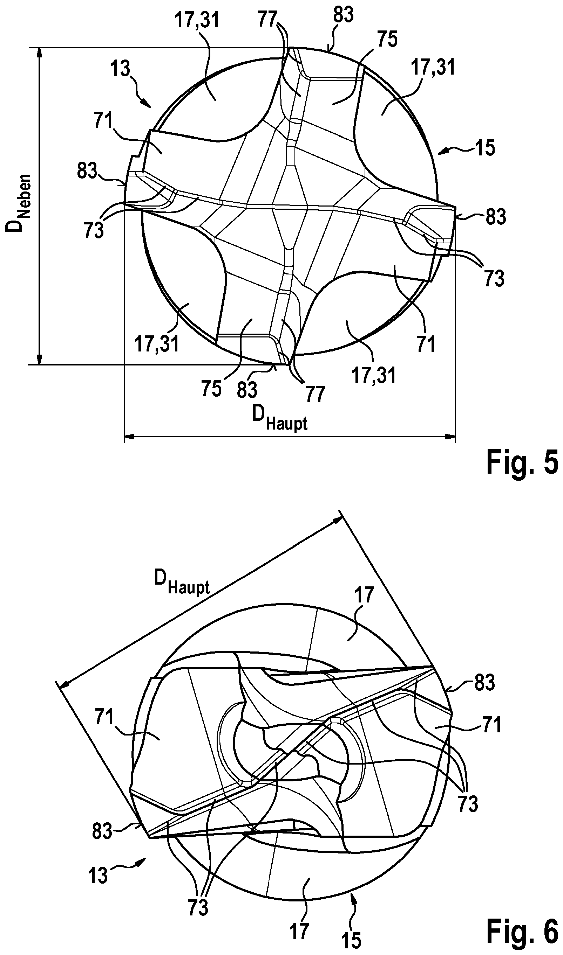

Fig. 6 zeigt ein Bohrwerkzeug, wobei der Bohrkopf 13 aus zwei Hauptschneidelemente 71 besteht, sodass keine Nebenschneidelemente 75 vorgesehen sind.

Der Befestigungsabschnitt 21 weist mehrere radiale Ausnehmungen auf, welche dazu vorgesehen sind, eine formschlüssige und/oder kraftschlüssige Verbindung des Bohrwerkzeugs, insbesondere des Befestigungsabschnitt 21 des Bohrwerkzeugs, mit der Handwerkzeugmaschine 101 zu bilden. Die Ausnehmungen 81a, 81b sind zumindest teilweise analog zu, insbesondere ähnlich mit, vorzugsweise übereinstimmend mit, Ausnehmungen einer SDS-Aufnahme eines Bohrwerkzeugs ausgebildet. Der Befestigungsabschnitt 21 des Bohrwerkzeugs 11 kann dabei identisch zu herkömmlichen sich auf dem Markt befindlichen Befestigungsabschnitten, wie beispielsweise SDS, SDS-max oder SDS-plus, ausgebildet sein. Derartige SDS-Befestigungsabschnitte sind einem Fachmann bekannt und auf dem Markt erhältlich, sodass auf eine detaillierte Beschreibung der Anordnung und Ausgestaltung dieser Ausnehmungen 81a, 81b verzichtet wird.

Der Bohrkopf 13 und der Bohrerschaft 15 werden mittels eines Fügeverfahrens miteinander verbunden, und bilden einen Verbindungsbereich 55 des Bohrwerkzeugs 11. Der Verbindungsbereich 55 umfasst dabei eine erste Verbindungsfläche 51 des Bohrkopfs 13 und eine zweite Verbindungsfläche 57 des Bohrerschafts 15. Die erste Verbindungsfläche 51 und die zweite Verbindungsfläche 57 bilden dabei eine einander zumindest im Wesentlichen identische Verbindungsflächen, welche im miteinander verbunden werden, sodass insbesondere die erste Verbindungsfläche 51 die zweite Verbindungsfläche 57 vollflächig bedeckt.

## Patentansprüche

1. Gesteinsbohrwerkzeug für eine tragbare Werkzeugmaschine,
- mit einem Hartmetall-Bohrkopf (13),
- mit einem mit dem Bohrkopf (13) stoffschlüssig verbundenen Bohrerschaft (15) und
- mit einer Rotationsachse (a),
wobei der Bohrerschaft (15) einteilig ausgebildeten ist und einen eine sich spiralförmig um den Bohrerschaft (15) windende Fördernut (17) aufweisenden Förderabschnitt (19) zum Abtransport von Bohrmehl und einen Befestigungsabschnitt (21) aufweist, welcher dazu vorgesehen ist das Bohrwerkzeug (11) mit einer Werkzeugmaschine lösbar zu befestigen, wobei
der Förderabschnitt (19) an einem dem Bohrkopf (13) benachbarten Bohrkopfstützbereich (23) des Förderabschnitts (19) eine Durchmesserverstärkung aufweist, **dadurch gekennzeichnet, dass** der Bohrkopf (13) zumindest ein Nebenschneidelement (75) aufweist, wobei das Bohrwerkzeug (11) einen das zumindest eine Nebenschneidelement (75) des Bohrkopfs (13) begrenzenden Nebenschneiddurchmesser (D_Neben) aufweist, welcher im Wesentlichen dem ersten Durchmesser (D1) des Förderabschnitts (19) entspricht.

2. Bohrwerkzeug nach Anspruch 1, **dadurch gekennzeichnet, dass** der Förderabschnitt (19) an dem dem Bohrkopf (13) benachbarten, insbesondere angrenzenden, Bohrkopfstützbereich (23) des Förderabschnitts (19) einen ersten maximalen Durchmesser (D1) und an einem dem Befestigungsabschnitt (21) benachbarten, insbesondere angrenzenden, Fördernutauslaufbereichs (25) des Förderabschnitts (19) einen zweiten maximalen Durchmesser (D2) aufweisen, wobei der erste Durchmesser (D1) größer ist als der zweite Durchmesser (D2).

3. Bohrwerkzeug nach einem der vorhergehenden Ansprüche, **dadurch gekennzeichnet, dass** der Bohrkopf (13) zumindest ein Hauptschneidelement (71) aufweist, wobei das Bohrwerkzeug (11) einen das zumindest eine Hauptschneidelement (71) des Bohrkopfs (13) begrenzenden Hauptschneiddurchmesser (D_Haupt) aufweist, welcher den ersten Durchmesser (D1) des Förderabschnitts (19) übersteigt.

4. Bohrwerkzeug nach einem der vorhergehenden Ansprüche, **dadurch gekennzeichnet, dass** sich der Bohrkopfstützbereich (23) des Förderabschnitts (19) in axialer Richtung entlang der Rotationsachse (a) bis zu einem 3-fachen, insbesondere bis zu einem 2-fachen, vorzugsweise bis zu einem 1-fachen, des ersten Durchmessers (D1) erstreckt.

5. Bohrwerkzeug nach einem der vorhergehenden Ansprüche, **dadurch gekennzeichnet, dass** ein, insbesondere maximaler, dritter Durchmesser (D3) des Bohrkopfstützbereiches (23) in axialer Richtung der Rotationsachse (a) von dem Bohrkopf (13) zum Bohrerschaft (15) derart abnimmt, insbesondere kontinuierlich abnimmt, dass der dritte Durchmesser des Bohrkopfstützbereichs (23) von dem ersten Durchmesser (D1) des Bohrkopfstützbereichs (23) des Förderabschnitts (19) zu dem zweiten Durchmesser (D2) des Fördernutauslaufbereichs (25) des Förderabschnitts (19) abnimmt.

6. Bohrwerkzeug nach einem der vorhergehenden Ansprüche, **dadurch gekennzeichnet, dass** der erste Durchmesser (D1) gegenüber dem zweiten Durchmesser (D2) bis zu 10 %, insbesondere bis zu 8 %, vorzugsweise bis zu 5 %, bevorzugt bis zu 3 %, größer ist.

7. Bohrwerkzeug nach einem der vorhergehenden Ansprüche, **dadurch gekennzeichnet, dass** der Bohrkopf (13) eine an die Fördernut (17) des Förderabschnitts (19) anschließende weitere Bohrkopffördernut (23) aufweist, wobei die Bohrkopffördernut (31) in axialer Richtung der Rotationsachse (a) in die Fördernut (17) des Förderabschnitts (19) übergeht, wobei der Bohrerschaft (15) derart stoffschlüssig mit dem Bohrkopf (13) verbunden ist, dass die Bohrkopffördernut (23) zumindest teilweise von einem den Bohrkopf (13) mit dem Bohrerschaft (15) verbindenden Verbindungsmaterial überzogen ist, sodass ein "nahtloser" Übergang zwischen der Bohrkopffördernut (31) und der Fördernut (17) erfolgt.

8. Bohrwerkzeug nach einem der vorhergehenden Ansprüche, **dadurch gekennzeichnet, dass** die Fördernut (17) spanend, insbesondere drehend, in den Bohrerschaft (15) eingebracht wird.

9. Verfahren zur Herstellung eines Gesteinsbohrwerkzeugs nach einem der vorhergehenden Ansprüche 1 bis 8, umfassend zumindest die Schritte:
- zumindest abschnittsweises Erwärmen des Hartmetall-Bohrkopfs (13) und eines Bohrerschafts (15),
- axiales Aufsetzen des Bohrerschafts (15) und des Bohrkopfs (13) um den Bohrerschaft (15) mit dem Bohrkopf (13) zu verbinden und Fügen des Bohrkopfs (13) und des Bohrerschafts (15).

## Claims

1. Rock drilling tool for a portable power tool,
- having a hard-metal drill head (13),
- having a drill shank (15) that is connected in a materially integral manner to the drill head (13) and
- having a rotation axis (a),
wherein the drill shank (15) is configured so as to be integral, and for conveying away drilling dust has a conveying portion (19) that has a conveying groove (17) that winds in a helical manner about the drill shank (15), and has a fastening portion (21) which is provided for releasably fastening the drilling tool (11) to a power tool,
wherein
the conveying portion (19) on a drill head support region (23) of the conveying portion (19) that neighbours the drill head (13) has a diameter reinforcement, **characterized in that** the drill head (13) has at least one secondary cutting element (75), wherein the drilling tool (11) has a secondary cutting diameter (D_secondary) which delimits the at least one secondary cutting element (75) of the drill head (13) and which substantially corresponds to the first diameter (D1) of the conveying portion (19).

2. Drilling tool according to Claim 1, **characterized in that** the conveying portion (19) on the drill head support region (23) of the conveying portion (19) that neighbours the drill head (13), in particular is contiguous to the latter, has a first maximum diameter (D1), and on a conveying groove run-out region (25) of the conveying portion (19) that neighbours the fastening portion (21), in particular is contiguous to the latter, has a second maximum diameter (D2), wherein the first diameter (D1) is larger than the second diameter (D2).

3. Drilling tool according to one of the preceding claims, **characterized in that** the drill head (13) has at least one primary cutting element (71), wherein the drilling tool (11) has a primary cutting diameter (D_primary) which delimits the at least one primary cutting element (71) of the drill head (13) and which exceeds the first diameter (D1) of the conveying portion (19) .

4. Drilling tool according to one of the preceding claims, **characterized in that** the drill head support region (23) of the conveying portion (19) in the axial direction along the rotation axis (a) extends up to 3 times, in particular up to 2 times, preferably up to 1 times, the first diameter (D1).

5. Drilling tool according to one of the preceding claims, **characterized in that** an, in particular maximum, third diameter (D3) of the drill head support region (23) in the axial direction of the rotation axis (a) from the drill head (13) to the drill shank (15) decreases in such a manner, in particular decreases in a continuous manner, that the third diameter of the drill head support region (23) decreases from the first diameter (D1) of the drill head support region (23) of the conveying portion (19) to the second diameter (D2) of the conveying groove run-out region (25) of the conveying portion (19).

6. Drilling tool according to one of the preceding claims, **characterized in that** the first diameter (D1) in relation to the second diameter (D2) is larger by up to 10%, in particular by up to 8%, preferably by up to 5%, more preferably by up to 3%.

7. Drilling tool according to one of the preceding claims, **characterized in that** the drill head (13) has a further drill head conveying groove (23) that adjoins the conveying groove (17) of the conveying portion (19), wherein the drill head conveying groove (31) in the axial direction of the rotation axis (a) transitions into the conveying groove (17) of the conveying portion (19), wherein the drill shank (15) is connected in a materially integral manner to the drill head (13) such that the drill head conveying groove (23) is at least in part sheathed by a connection material that connects the drill head (13) to the drill shank (15), so that a "seamless" transition between the drill head conveying groove (31) and the conveying groove (17) is performed.

8. Drilling tool according to one of the preceding claims, **characterized in that** the conveying groove (17) is incorporated in the drill shank (15) by subtractive machining, in particular by turning.

9. Method for producing a rock drilling tool according to one of the preceding Claims 1 to 8, comprising at least the steps:
- heating at least in portions the hard-metal drill head (13) and a drill shank (15),
- axially placing the drill shank (15) and the drill head (13) so as to connect the drill shank (15) to the drill head (13), and joining the drill head (13) and the drill shank (15).

## Revendications

1. Outil de forage de roche pour une machine-outil portable,
- avec une tête de forage en métal dur (13),
- avec une tige de foret (15) reliée à la tête de forage (13) par liaison de matière et
- avec un axe de rotation (a),
la tige de foret (15) étant réalisée d'une seule pièce et présentant une section de transport (19) présentant une rainure de transport (17) s'enroulant en spirale autour de la tige de foret (15) pour l'évacuation de poussière de forage et une section de fixation (21) qui est prévue pour fixer de manière amovible l'outil de forage (11) à une machine-outil,
la section de transport (19) présentant un renforcement de diamètre au niveau d'une zone de support de tête de forage (23) de la section de transport (19) adjacente à la tête de forage (13), **caractérisé en ce que** la tête de forage (13) présente au moins un élément de coupe secondaire (75), l'outil de forage (11) présentant un diamètre de coupe secondaire (D_secondaire) délimitant l'au moins un élément de coupe secondaire (75) de la tête de forage (13), lequel correspond essentiellement au premier diamètre (D1) de la section de transport (19).

2. Outil de forage selon la revendication 1, **caractérisé en ce que** la section de transport (19) présente un premier diamètre maximal (D1) au niveau de la zone de support de tête de forage (23) de la section de transport (19), adjacente à la tête de forage (13), notamment contiguë, et un deuxième diamètre maximal (D2) au niveau d'une zone de sortie de rainure de transport (25) de la section de transport (19), adjacente à la section de fixation (21), notamment contiguë, le premier diamètre (D1) étant supérieur au deuxième diamètre (D2).

3. Outil de forage selon l'une quelconque des revendications précédentes, **caractérisé en ce que** la tête de forage (13) présente au moins un élément de coupe principal (71), l'outil de forage (11) présentant un diamètre de coupe principal (D_principal) délimitant l'au moins un élément de coupe principal (71) de la tête de forage (13), qui dépasse le premier diamètre (D1) de la section de transport (19).

4. Outil de forage selon l'une quelconque des revendications précédentes, **caractérisé en ce que** la zone de support de tête de forage (23) de la section de transport (19) s'étend dans la direction axiale le long de l'axe de rotation (a) jusqu'à 3 fois, notamment jusqu'à 2 fois, de préférence jusqu'à 1 fois, le premier diamètre (D1).

5. Outil de forage selon l'une quelconque des revendications précédentes, **caractérisé en ce qu'**un troisième diamètre (D3), notamment maximal, de la zone de support de tête de forage (23) diminue dans la direction axiale de l'axe de rotation (a) de la tête de forage (13) à la tige de foret (15), notamment diminue de manière continue, de telle sorte que le troisième diamètre de la zone de support de tête de forage (23) diminue du premier diamètre (D1) de la zone de support de tête de forage (23) de la section de transport (19) au deuxième diamètre (D2) de la zone de sortie de rainure de transport (25) de la section de transport (19).

6. Outil de forage selon l'une quelconque des revendications précédentes, **caractérisé en ce que** le premier diamètre (D1) est supérieur au deuxième diamètre (D2) jusqu'à 10 %, notamment jusqu'à 8 %, préférentiellement jusqu'à 5 %, de préférence jusqu'à 3 %.

7. Outil de forage selon l'une quelconque des revendications précédentes, **caractérisé en ce que** la tête de forage (13) présente une autre rainure de transport de tête de forage (23) se raccordant à la rainure de transport (17) de la section de transport (19), la rainure de transport de tête de forage (31) se raccordant dans la direction axiale de l'axe de rotation (a) à la rainure de transport (17) de la section de transport (19), la tige de foret (15) étant reliée à la tête de forage (13) par liaison de matière de telle sorte que la rainure de transport de tête de forage (23) est au moins partiellement recouverte d'un matériau de liaison reliant la tête de forage (13) à la tige de foret (15), de telle sorte qu'il se produit une transition « sans soudure » entre la rainure de transport de tête de forage (31) et la rainure de transport (17).

8. Outil de forage selon l'une quelconque des revendications précédentes, **caractérisé en ce que** la rainure de transport (17) est réalisée par usinage, notamment par tournage, dans la tige de foret (15).

9. Procédé de fabrication d'un outil de forage de roche selon l'une quelconque des revendications 1 à 8 précédentes, comprenant au moins les étapes consistant à :
- chauffer au moins par sections la tête de forage en métal dur (13) et une tige de foret (15),
- mettre en place axialement la tige de foret (15) et la tête de forage (13) afin de relier la tige de foret (15) à la tête de forage (13) et assembler la tête de forage (13) et la tige de foret (15).
